# FASCICULE DE BREVET EUROPEEN

(11) **EP 1 555 101 B1**
(45) Date de publication et mention de la délivrance du brevet: **28.11.2007**
(21) Numéro de dépôt: 04028890.4
(22) Date de dépôt: 07.12.2004
(51) Int. Cl.: B28D 5/00, B28D 5/04, B23D 57/00

(54) **Dispositif de sciage par fil**
Drahtsägevorrichtung
Wire saw device

(30) Priorité: 17.12.2003 CH 21722003
(43) Date de publication de la demande: 20.07.2005
(73) Titulaire: HCT Shaping Systems SA, 1033 Cheseaux (CH)
(72) Inventeur: Muller, Andréas, 6353 Weggis (CH)
(74) Mandataire: Micheli & Cie SA

(56) Documents cités:
- EP-A- 0 716 910
- WO-A-00/37216
- US-A- 5 099 820
- PATENT ABSTRACTS OF JAPAN vol. 017, no. 664 (M-1523), 8 décembre 1993 (1993-12-08) -& JP 05 220731 A (SHIN ETSU HANDOTAI CO LTD), 31 août 1993 (1993-08-31)
- PATENT ABSTRACTS OF JAPAN vol. 1999, no. 03, 31 mars 1999 (1999-03-31) -& JP 10 328999 A (TOKYO SEIMITSU CO LTD), 15 décembre 1998 (1998-12-15)
- PATENT ABSTRACTS OF JAPAN vol. 011, no. 006 (M-551), 8 janvier 1987 (1987-01-08) -& JP 61 182761 A (SUMITOMO METAL IND LTD; others: 01), 15 août 1986 (1986-08-15)
- PATENT ABSTRACTS OF JAPAN vol. 010, no. 315 (M-529), 25 octobre 1986 (1986-10-25) -& JP 61 125767 A (SUMITOMO METAL IND LTD; others: 01), 13 juin 1986 (1986-06-13)

## Description

La présente invention concerne un dispositif de sciage par fil selon le préambule de la revendication 1, comprenant un bâti et au moins une nappe de fils tendue entre au moins deux cylindres guide-fils dont les axes sont sensiblement parallèles et maintenus en position par les cylindres guides-fils qui définissent l'intervalle entre les fils de ladite nappe de fils, donc l'épaisseur des tranches sciées séparées les unes des autres par des interstices de sciage, les fils étant susceptibles de se déplacer selon un mouvement alternatif ou continu en appui contre au moins une pièce à scier fixée sur une table support par l'intermédiaire d'au moins un support, des moyens étant prévus pour effectuer un mouvement d'avance relatif entre la pièce à scier et la nappe de fils suivant une direction d'avance, le dispositif de sciage comprenant des moyens pour effectuer un déplacement relatif transversal entre l'ensemble des tranches sciées de la pièce à scier et la nappe de fils suivant une direction de découpe sensiblement parallèle audits axes des cylindres guide-fils de façon que les fils de la nappe de fils servent d'outils pour découper les tranches sciées, l'amplitude de ce déplacement relatif transversal étant déterminée de façon que les tranches sciées soient détachées et séparées les unes des autres et de leur support.

Des dispositifs de sciage par fil du type précité avec déplacement des fils de la nappe de fils ou de la pièce à scier sont déjà connus, spécialement dans l'industrie des composants électroniques des ferrites, des quartz et silices, pour l'obtention en tranches fines de matériaux tels que le silicium poly- ou monocristallin ou de nouveaux matériaux tels que GaAs, InP, GGG ou également le quartz, le saphir synthétique, des matériaux céramiques. Le prix élevé de ces matériaux rend le sciage par fil plus attractif comparativement à d'autres techniques comme le sciage par disque diamanté.

Dans les dispositifs connus, la zone de sciage est constituée d'un ensemble d'au moins deux cylindres placés parallèlement. Ces cylindres, appelés guide-fils, sont gravés avec des gorges définissant l'intervalle entre les fils de la nappe, soit l'épaisseur des tranches. La pièce à scier est fixée sur une table support qui se déplace perpendiculairement à la nappe de fils. La vitesse de déplacement définit la vitesse de coupe. Le renouvellement du fil, ainsi que le contrôle de sa tension se fait dans une partie appelée zone de gestion du fil située en dehors de la zone de sciage proprement dite. L'agent qui régira la découpe est soit un abrasif fixé sur le fil, soit un abrasif libre amené sous forme de barbotine. Le fil n'agit que comme transporteur. Lors de la découpe en tranches fines de la pièce à scier, le fil tendu est à la fois guidé et tracté par les cylindres guide-fils.

Le document japonais JP 05 2200731 A qui constitue l'état de la technique le plus proche révèle un dispositif de sciage par fil du type précité selon le préambule de la revendication 1 qui comprend des moyens pour effectuer un déplacement relatif transversal entre l'ensemble des tranches sciées de la pièce à scier et la nappe de fils suivant une direction de découpe sensiblement parallèle aux axes des cylindres guide-fils permettant ainsi de détacher les tranches sciées. L'amplitude de ce déplacement relatif transversal est déterminée de façon que les tranches sciées soient détachées de leur support et séparées les unes des autres.

Le document EP-A-0716910 décrit un dispositif de sciage par fil dans lequel un bloc de silicium à scier est maintenu latéralement par deux paires de pièces de serrage pendant le sciage. Les tranches sciées sont récupérées dans une cassette comportant des fils tendus destinés à être introduits dans les interstices de sciage entre les tranches pour maintenir et séparer ces dernières.

Le document JP 10 328999 A décrit une scie à fils comportant un dispositif de découpe avec un chariot sur lequel un fil est monté sur quatre galets et destiné à découper les tranches sciées d'un talon. La chariot est déplacé suivant une direction parallèle aux cylindres guide-fils et permet ainsi de détacher les tranches sciées successivement. Les tranches sciées sont récupérées dans une cassette.

La présente invention a pour but d'améliorer et de perfectionner les dispositifs connus et elle est caractérisée à cet effet par les caractéristiques figurant à la revendication indépendante.

Lors du sciage et immédiatement après le sciage, les tranches sciées sont séparées par des interstices de sciage d'une faible largeur. Grâce aux moyens d'écartement revendiqués, les tranches sciées peuvent ensuite être écartées les unes des autres pour obtenir des interstices de séparation plus larges. De ce fait, les tranches sciées sont empêchées de se coller les unes aux autres et peuvent être lavées et traitées ultérieurement de façon aisée.

Selon un mode d'exécution favorable, les moyens d'écartement sont constitués par des bandes présentant une structure pliée en accordéon et susceptible de supporter les éléments de séparation formés par des fils.

Ces caractéristiques permettent d'obtenir une construction fiable et précise des moyens d'écartement.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et ses variantes.
La figure 1 est une vue de face du mode d'exécution de l'invention.
Les figures 2a et 2d sont des vues latérales partielles du mode d'exécution avant et après le découpage des tranches de leur talon.
Les figures 2b et 2c montrent des particularités de la figure 2a lors du découpage et la figure 2e représente ces particularités après le découpage.
La figure 3 est une vue de détail d'une variante du mode d'exécution.
Les figures 4a et 4d sont des vues latérales partielles du mode d'exécution avant et après le découpage du talon.
Les figures 4b et 4c montrent des particularités de la figure 4a lors du découpage et la figure 4e représente ces particularités après le découpage.
Les figures 5a et 5b illustrent le mode d'exécution plus en détail.
La figure 6 est une vue de face partielle du mode d'exécution.
La figure 7 est une vue partielle en perspective d'un dispositif non conforme à l'invention.

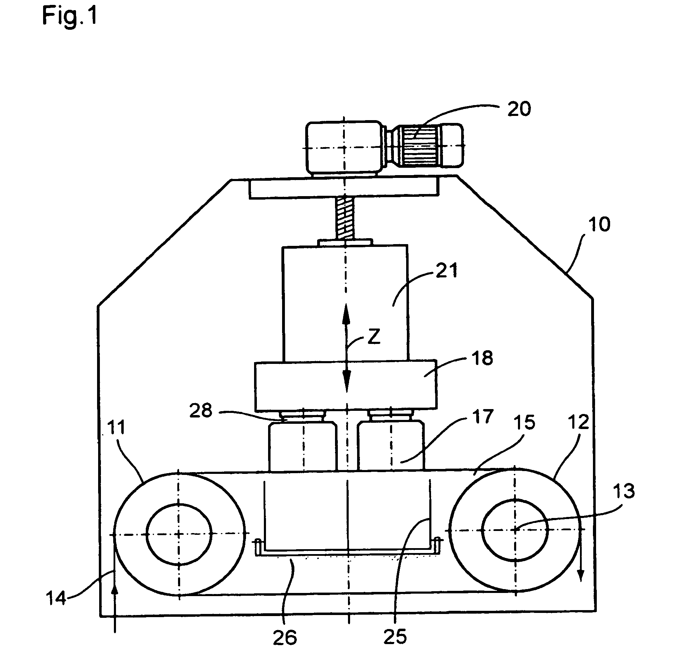

En référence à la figure 1, le dispositif de sciage selon le mode d'exécution comprend un bâti 10 et des cylindres guide-fils 11, 12, ici au nombre de deux, montés sur ce bâti avec leurs axes 13 disposés parallèlement, étant bien entendu que le dispositif pourrait avoir plus que deux cylindres guide-fils.

Le fil 14 est déroulé d'une bobine débitrice, non illustrée, et ensuite enroulé autour des cylindres guide-fils selon tout mode d'enroulement possible pour former au moins une nappe de fils 15 parallèles dans une zone de sciage. Le fil est ensuite récupéré dans un dispositif adéquat non illustré, tel qu'une bobine réceptrice ou un bac de récupération.

Une, deux ou davantage de pièces à scier 17, telles que des lingots en un matériau dur, sont montées sur une table support 18.

Cette table support 18 peut être déplacée verticalement selon une direction d'avance Z grâce à une colonne 21 et un moteur 20 pour mettre en appui la ou les pièces à scier 17 contre la nappe de fils 15.

La périphérie des cylindres guide-fils 11, 12 est gravée avec des gorges qui définissent l'intervalle entre les fils voisins de la nappe de fils 15, donc l'épaisseur des tranches sciées. Ces dernières sont séparées les unes des autres par des fentes ou interstices de sciage.

Le fil 14 est tendu et à la fois guidé et tracté par les cylindres guide-fils pour se déplacer selon un mouvement alternatif en va-et-vient ou continu. Ce fil est favorablement constitué d'acier à ressort d'un diamètre compris entre 0,1 et 0,2 mm afin de scier des blocs de matériaux dures ou de composition plus particulière, tels que silicium, céramique, composés des éléments des groupes III-V et II-VI, GGG (Grenat à Gadolinium-Gallium), saphir, etc., en tranches de 0,1 à 5 mm d'épaisseur environ. L'agent abrasif est un produit du commerce et peut être du diamant, du carbure de silicium, de l'alumine, etc., sous forme fixée au fil ou sous forme libre en suspension dans un liquide qui sert de transporteur aux particules de l'abrasif.

Quand les opérations de sciage et de découpage des tranches sont terminées, les tranches sciées sont récupérées dans un bac de réception 25 disposé sur un support 26 solidaire du bâti 10.

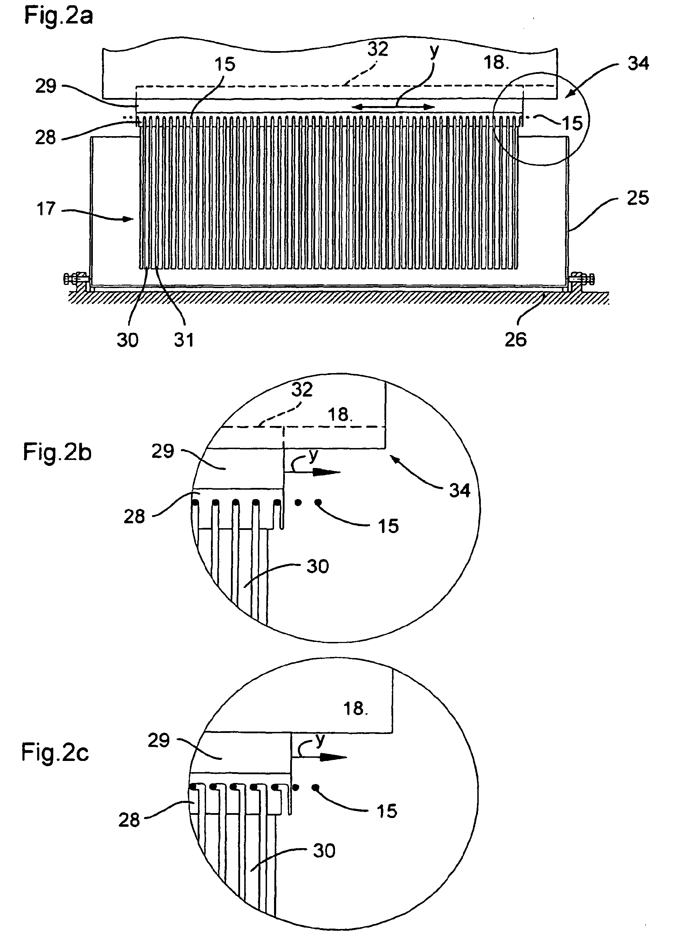

En référence aux figures 2a à 2e, la ou les pièces à scier 17 sont fixées par collage sur un support temporaire 28 qui peut être en verre ou en matière synthétique et ce support temporaire est fixé par collage sur un support de montage 29, par exemple en acier. Ce dernier est monté sur la table support 18 grâce à des éléments de guidage et de coulissement 32 permettant de retenir le support de montage 29 sur la table support 1 suivant la direction verticale Z et permettant une translation relative entre la table support 18 et le support de montage 29 suivant une direction Y, parallèle aux axes 13 des cylindres guide-fils 10, 11 et perpendiculaire aux fils de la nappe de fils 15, donc une translation relative entre la ou les pièces à scier et la nappe de fils suivant la direction Y.

Le sciage des pièces 17 en tranches 30 est effectué grâce à un mouvement relatif des pièces à scier 17 et de la nappe de fils 15 suivant la direction d'avance Z. Ce mouvement de sciage est poursuivi jusqu'à ce que les fils de la nappe de fils 15 pénètrent dans le support temporaire 28.

Le dispositif de sciage comprend des moyens 34 qui permettent d'effectuer un déplacement relatif transversal entre l'ensemble des tranches sciées 30 de la pièce à scier 17 et la nappe de fils 15 suivant la direction de découpe Y parallèle ou sensiblement parallèle audits axes 13 des cylindres guide-fils. L'amplitude de ce déplacement relatif transversal est déterminée de façon que les tranches sciées 30 soient détachées les unes des autres et de leur support temporaire 28 servant de talon pour être récupérées dans le bac de réception 25.

Dans le mode d'exécution décrit, les moyens 34 qui permettent ce déplacement relatif sont constitués par les éléments de guidage et de coulissement 32 suivant la direction Y.

La figure 2b montre en vue agrandie la position relative de la table support 18 et de la nappe de fils 15 par rapport à celle des tranches sciées 30 et du support de montage 29 avant la phase de découpe ou tronçonnage des tranches sciées 30.

Dans une position intermédiaire illustrée à la figure 2c, le fils 14 de la nappe de fils 15 servant d'outil de découpe ont partiellement tronçonné les tranches 30 au niveau du support temporaire 28 qui s'est déplacé avec le support de montage 29 vers la droite par rapport à la nappe de fils 15 et la table support 18.

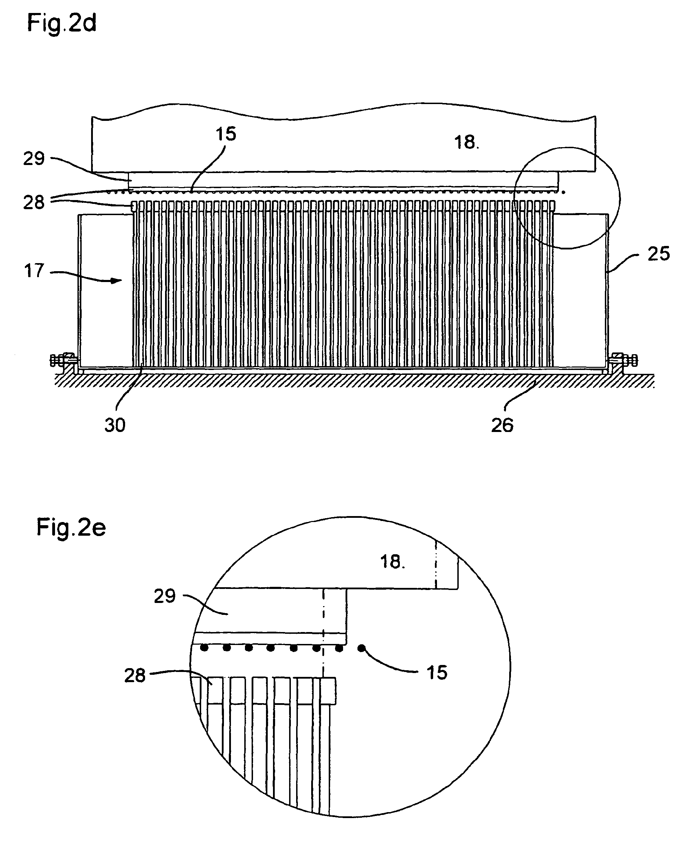

Les figures 2d et 2e montrent la position finale après découpage ou tronçonnage complet des tranches sciées 30 qui reposent dans le bac de réception 25 et qui peuvent donc aisément être extraites du dispositif de sciage dans ce bac de réception 25.

Le déplacement relatif transversal selon la direction Y pourra être effectué de façon différente, par exemple par déplacement transversal d'une partie ou de l'ensemble de la table support 18 ou encore par déplacement latéral de la nappe de fils 15 par rapport aux tranches sciées 30.

La découpe des tranches sciées suivant la direction Y pourra être réalisée à différent niveau, soit dans le support temporaire 28, soit dans la colle entre ce support temporaire 28 et la pièce à scier 17, soit encore dans l'extrémité supérieure de la pièce à scier 17.

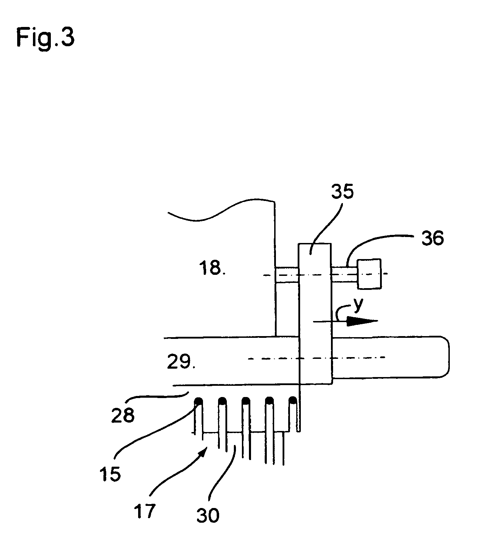

Selon une variante illustrée à la figure 3, le déplacement relatif transversal selon la direction de découpe Y peut être réalisé grâce à une pièce verticale 35 solidaire du support de montage 29 et à une vis 36 traversant la pièce verticale 35 par un alésage fileté et prenant appui sur la table support 18.

Par rotation de la vis 36, soit manuellement, soit de façon motorisée par un moteur non illustré, le support de montage 29 et la pièce à scier 17 sont déplacés vers la droite à la figure 3 selon la direction Y et les fils de la nappe de fils 15 servant d'outils de découpe tronçonnent les tranches sciées 30 au niveau du support temporaire 28 pour les séparer complètement les unes des autres.

Ce déplacement transversal pourra également être réalisé par tous types d'organes d'entraînement mécaniques, électriques, hydrauliques ou pneumatiques.

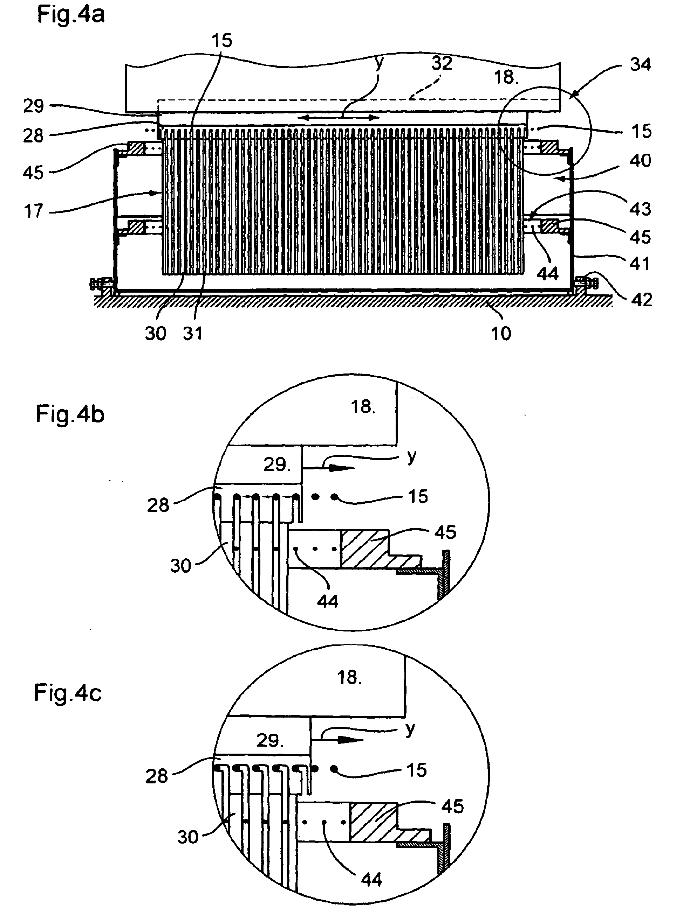

Comme illustré aux figures 4a à 4e, le dispositif de sciage comprend des moyens de maintien 40 permettant de maintenir les tranches 30 partiellement ou entièrement sciées sensiblement parallèles entres elles et de façon que la largeur des interstices de sciage 31 entre les tranches 30 soit conservée sensiblement constante pendant le sciage des tranches et pendant et après la découpe ou le tronçonnage transversal subséquent des tranches 30 de leur support de montage 29.

Ces moyens de maintien 40 sont dans le cas des figures 4a à 4c montés sur le bâti 10 du dispositif de sciage 10 et comprennent un bac 41 dont le fond et/ou les parois peuvent être ajourés ou munis d'un écoulement de façon que le liquide de sciage et l'abrasif puissent être évacués du bac. Ce bac est maintenu grâce à des éléments de fixation 42 sur le bâti 10 et muni d'éléments de séparation 43 destinés à être introduits dans les interstices de sciage 31 entre les tranches sciées 30 pour maintenir exactement l'écart entre ces dernières.

Les éléments de séparation 43 sont dans ce mode d'exécution constitués par une série de fils 44 tendus sur des cadres 45. Le mode d'exécution représenté possède deux cadres 45 superposés, mais tout autre nombre de cadres de 1 à 5 pourra être monté dans le bac 41.

Ainsi, le sciage peut être effectué jusqu'au support temporaire 28 (figure 4a), tandis que les tranches sciées 30 sont maintenues avec un écart régulier, ce qui assure une grande qualité du produit sans ondulations, stries et irrégularités.

En outre, les tranches sciées sont déjà séparées les unes des autres, ce qui permet des traitements et un conditionnement ultérieurs facilités.

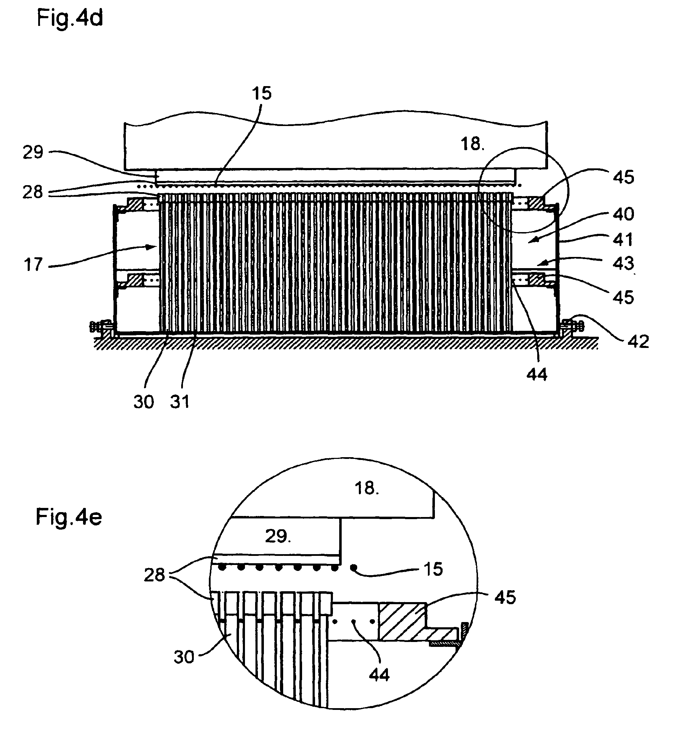

Lors du découpage ou tronçonnage subséquent (figures 4b, 4c), le support de montage 29, les tranches sciées 30 et les cadres 45 avec leurs fils de séparation 44 sont déplacés transversalement selon la direction Y. Les cadres 45 présentent ainsi un degré de liberté par rapport au bac 41 et peuvent être déplacés latéralement par rapport à ce bac, comme cela est visible aux figures 4b, 4c et 4e.

A la fin du découpage ou tronçonnage (figures 4d et 4e), les tranches sciées 30 sont maintenues séparées les unes des autres dans le bac 41 qui sert ainsi de cassette de transport permettant l'enlèvement aisé de l'ensemble des tranches sciées 30, sans qu'il soit nécessaire de sortir les fils de la nappe de fils 15 des interstices de sciage 31.

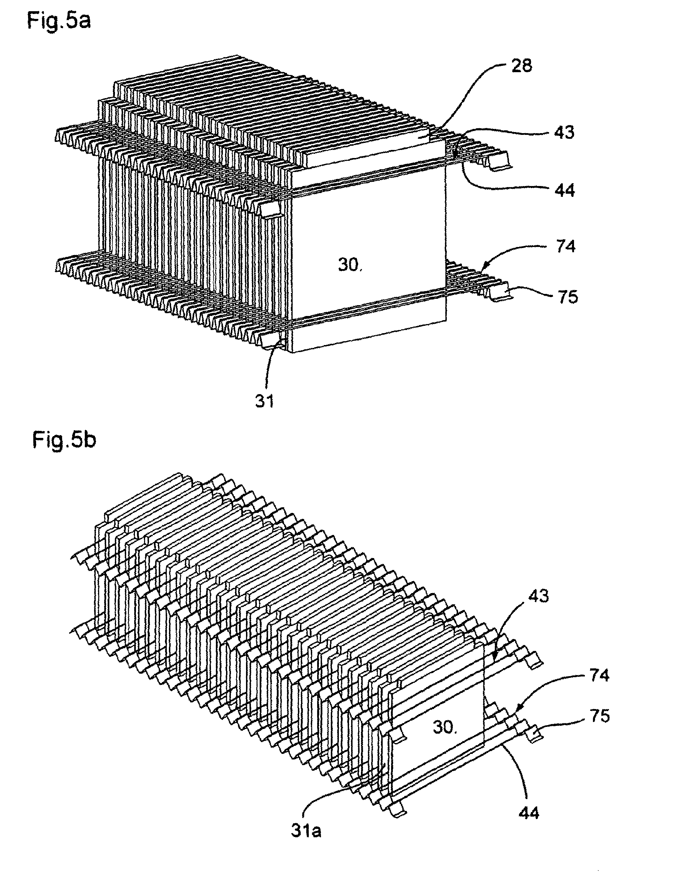

Comme illustré aux figures 5a et 5b, les éléments de séparation 43 sous forme de fils de séparation 44 sont supportés par des bandes 75 présentant une structure pliée en accordéon. Dans la position illustrée à la figure 5a, les tranches sciées 30 sont séparées par des interstices 31 de sciage d'une faible largeur. Après le sciage complet, les tranches sciées peuvent être écartées les unes des autres grâce à la structure pliée en accordéon des bandes 75 (figure 5b) pour obtenir des interstices de séparation 31 a beaucoup plus larges. Ainsi, les tranches sciées ne peuvent plus se coller les unes aux autres et peuvent être lavées et traitées aisément. Elles pourront également être transvasées facilement dans des cassettes de stockage standardisées. Donc, le dispositif de sciage comprend des moyens d'écartement 74 des éléments de séparation 43 permettant un écartement des tranches sciées.

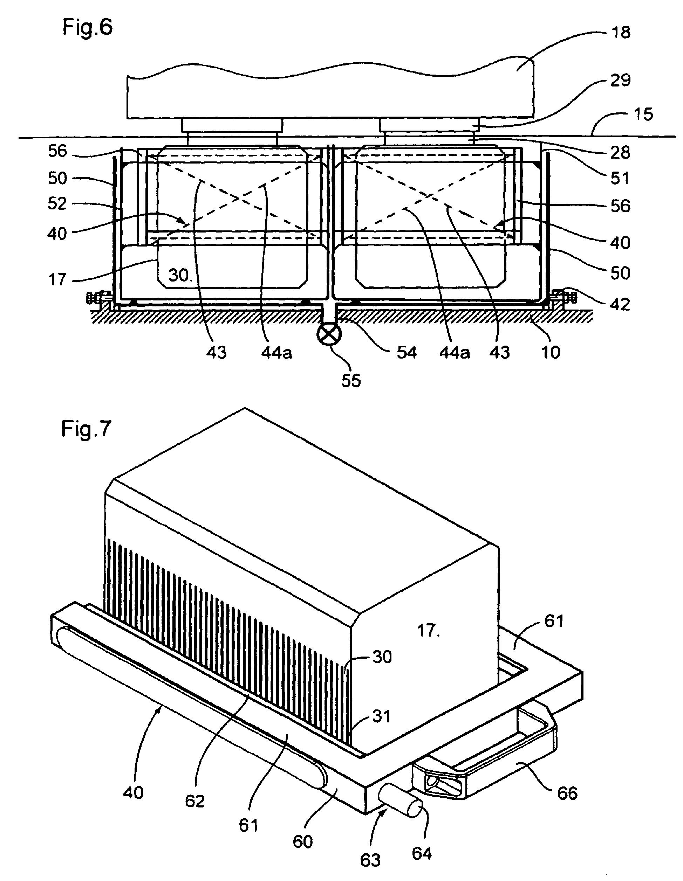

Selon une variante favorable illustrée à la figure 6, deux tiroirs 51, 52 pourront être logés de façon coulissante dans un bac 50 fixé sur le bâti 10.

Chacun des tiroirs contient des moyens de maintien 40 pour les tranches de l'une ou de l'autre des pièces à scier.

Le fond et les parois latérales de ces tiroirs 51, 52 pourront être ajourés pour l'écoulement du liquide de sciage. Ce dernier pourra être retenu dans le bac 50 et évacué par un écoulement 54 avec une vanne 55.

Les moyens de maintien 40 comprennent également des éléments de séparation 43 destinés à être introduits dans les interstices de sciage. Ces éléments de séparation 43 peuvent être constitués par des fils horizontaux, oblique et/ou diagonaux tendus sur un, deux ou plusieurs cadres 56. Les fils obliques 44a pourront ainsi constituer deux nappes de fils croisés.

Les éléments de séparation pourront également être constitués par des parois verticales ou des bandes fixées aux parois latérales des tiroirs. Après sciage et tronçonnage, les tiroirs 51, avec les tranches sciées de chacun des lingots pourront être ôtés du dispositif de sciage à la manière de cassettes.

Un mode d'exécution de moyens de maintien 40 non conforme à l'invention et illustré à la figure 7 comprend un cadre 60 en forme de U. Les branches longitudinales 61 de ce cadre sont destinées à s'appliquer latéralement contre les tranches sciées 30 de la pièce à scier 17 par l'intermédiaire de pièces élastiques 62. La force d'application et de maintien pourra être obtenue grâce à un dispositif pneumatique 63 comportant un conduit d'entrée 64 et des conduits internes permettant de gonfler les pièces élastiques 62. La force d'application pourra également être obtenue par d'autres moyens, tels qu'un serrage mécanique des branches longitudinales 61 l'une vers l'autre au moyen d'une commande mécanique, pneumatique ou hydraulique.

Ce cadre 60 pourra être mis en place lors du sciage pour maintenir les tranches sciées parallèles. Lors du découpage ou tronçonnage final des tranches sciées, les tranches 30 sont maintenues par serrage et peuvent être rapidement ôtées du dispositif de sciage grâce à la poignée 66. On pourra également utiliser deux ou davantage de cadres 60 superposés et appliqués au fur et à mesure de la progression du sciage.

Il est bien entendu que les modes d'exécution conforme à l'invention décrits ci-dessus ne présentent aucun caractère limitatif et qu'ils peuvent recevoir toutes modifications désirables à l'intérieur du cadre tel que défini par la revendication 1. En particulier, une, deux ou plusieurs tables support 18 pourront supporter une ou plusieurs pièces à scier 17.

Le déplacement relatif transversal pourra être réalisé de façon différente, par exemple par déplacement de l'ensemble des éléments suspendus ou par déplacement de la nappe de fils.

Le bac de réception des tranches et les éléments de séparation des tranches pourront présenter une toute autre construction par exemple sous forme de cassettes, chacune adaptée à recevoir les tranches d'une pièce sciée.

## Revendications

1. Dispositif de sciage par fil comprenant un bâti (10) et au moins une nappe de fils (15) tendue entre au moins deux cylindres guide-fils (11, 12) dont les axes sont sensiblement parallèles et maintenue en position par les cylindres guide-fils (11, 12) qui définissent l'intervalle entre les fils de ladite nappe de fils, donc l'épaisseur des tranches (30) sciées séparées les unes des autres par des interstices de sciage (31), les fils étant susceptibles de se déplacer selon un mouvement alternatif ou continu en appui contre au moins une pièce à scier (17) fixée sur une table support (18) par l'intermédiaire d'au moins un support (28, 29), des moyens (20, 21) étant prévus pour effectuer un mouvement d'avance relatif entre la pièce à scier (17) et la nappe de fils (15) suivant une direction d'avance (Z), le dispositif de sciage comprenant des moyens (34) pour effectuer un déplacement relatif transversal entre l'ensemble des tranches sciées (30) de la pièce à scier (17) et la nappe de fils (15) suivant une direction de découpe (Y) sensiblement parallèle auxdits axes (13) des cylindres guide-fils de façon que les fils de la nappe de fils servent d'outils pour découper les tranches sciées (30), l'amplitude de ce déplacement relatif transversal étant déterminée de façon que les tranches sciées (30) soient détachées et séparées les unes des autres et de leur support (28, 29), **caractérisé par le fait qu'**il comprend des moyens de maintien (40) agencés de façon à maintenir, pendant et après le sciage et la découpe, les tranches (30) sciées sensiblement parallèles entre elles et de façon que la largeur des interstices de sciage (31) est sensiblement conservée, les moyens de maintien comportant des éléments de séparation (43) destinés à être introduits au moins partiellement dans les interstices de sciage (31) entre les tranches (30) pour maintenir ces dernières, ces éléments de séparation étant montés sur au moins un support (45, 56), le dispositif comprenant des moyens d'écartement (74), des éléments de séparation (43) permettant un écartement des tranches sciées (30).

2. Dispositif selon la revendication 1, **caractérisé par le fait que** les moyens d'écartement (74) sont constitués par des bandes (75) présentant une structure pliée en accordéon et susceptible de supporter les éléments de séparation (43) formés par des fils (44).

3. Dispositif selon la revendication 1, **caractérisé par le fait que** lesdits moyens (34) pour effectuer un déplacement relatif transversal sont constitués par des éléments de guidage et de coulissement (32) permettant une translation relative de la ou des pièces à scier (17) par rapport à la nappe de fils (15).

4. Dispositif selon la revendication 3, **caractérisé par le fait que** les éléments de guidage et de coulissement (32) sont agencés entre la table support (18) et ledit au moins un support (28, 29) ou dans la table support (18).

5. Dispositif selon l'une des revendications précédentes, **caractérisé par le fait qu'**il comprend au moins un organe de réception (25) monté de façon amovible sur le dispositif et agencé de façon à recevoir les tranches sciées (30) et séparées après leur découpage.

6. Dispositif selon la revendication 5, **caractérisé par le fait que** les moyens de maintien (40) sont agencés dans l'organe de réception (25).

7. Dispositif de sciage selon la revendication 1, **caractérisé par le fait que** ledit au moins un support (45, 56) est agencé dans au moins un bac (41, 50) monté sur ledit bâti (10).

8. Dispositif de sciage selon la revendication 7, **caractérisé par le fait qu'**il comprend au moins deux supports (56) agencés dans au moins deux tiroirs (51, 52) montés de façon coulissante dans le bac (50).

9. Dispositif selon la revendication 7 ou 8, **caractérisé par le fait que** les éléments de séparation (43) sont constitués par des fils (44, 44a) tendus sur le ou les supports (45,56) suivant des directions horizontales et/ou obliques et/ou pour former des nappes de fils croisées.

## Claims

1. Wire sawing device comprising a frame (10) and at least one layer (15) of wires stretched out between at least two wire guide cylinders (11, 12) with essentially parallel axes and held in position by the wire guide cylinders (11, 12) defining the interval between the wires of said layer of wires, and hence the thickness of the sawed slices (30) that are separated from each other by sawing gaps (31), the wires being adapted to move with alternating or continuous movement while bearing against at least one piece (17) to be sawed and held fixed on a support table (18) via at least one support (28, 29), means (20, 21) being provided to accomplish a forward movement of the piece (17) to be sawed relative to the layer (15) of wires along a direction (Z) of advance, the sawing device comprising means (34) to accomplish a transverse shift of the set of sawed slices (30) of the piece (17) to be sawed relative to the layer (15) of wires along a cutting direction (Y) essentially parallel to said axes (13) of the wire guide cylinders, in such a way that the wires of the layer of wires serve as tools for cutting off the slices (30) sawed, the amplitude of this relative transverse shift being determined such that the slices (30) sawed be detached and separated from one another and from their support (28, 29), **characterised by** the fact that it comprises holding means (40) arranged so as to maintain the slices (30) sawed essentially parallel to each other during and after the sawing and cutting, and so that the width of the sawing gaps (31) is essentially conserved, the holding means comprising separation elements (43) to be introduced at least in part into the sawing gaps (31) between the slices (30) in order to hold them, these separation elements being mounted onto at least one support (45, 56), the device comprising means (74) for spreading apart, and separation elements (43) allowing the slices (30) sawed to be spread apart.

2. Device according to claim 1, **characterised in that** the means (74) for spreading apart consist of ribbons (75) having a pleated structure, and being able to support the separation elements (43) formed by wires (44).

3. Device according to claim 1, **characterised in that** said means (34) for accomplishing a relative transverse shift consist of guiding and sliding elements (32) allowing the piece or pieces (17) to be sawed to be translated relative to the layer (15) of wires.

4. Device according to claim 3, **characterised in that** the guiding and sliding elements (32) are arranged between the support table (18) and said at least one support (28, 29) or within the support table (18).

5. Device according to one of the preceding claims, **characterised in that** it comprises at least one receiving organ (25) detachably mounted onto the device, and arranged so as to receive the slices (30) sawed and separated after they have been cut off.

6. Device according to claim 5, **characterised in that** the holding means (40) are arranged within the receiving organ (25).

7. Sawing device according to claim 1, **characterised in that** said at least one support (45, 56) is arranged within at least one vessel (41, 50) mounted onto said frame (10).

8. Sawing device according to claim 7, **characterised in that** it comprises at least two supports (56) arranged within at least two drawers (51, 52) slidingly mounted into the vessel (50).

9. Device according to claim 7 or 8, **characterised in that** the separation elements (43) consist of wires (44, 44a) stretched out on the support or supports (45, 56) in horizontal and/or oblique directions and/or so as to form crossed layers of wires.

## Patentansprüche

1. Drahtsägevorrichtung mit einem Rahmen (10) und zumindest einer Schicht (15) von Drähten, die zwischen zumindest zwei Drahtführungszylindern (11, 12) aufgespannt ist, deren Achsen im Wesentlichen parallel sind, und die in ihrer Lage durch die Drahtführungszylinder (11, 12) gehalten wird, die den Abstand zwischen den Drähten der Drahtschicht und somit die Dicke der gesägten Scheiben (30) definieren, die voneinander durch Sägespalte (31) getrennt sind, wobei die Drähte einer Hin- und Her- oder einer kontinuierlichen Bewegung folgend und an das zumindest eine zu sägende Werkstück (17) angedrückt bewegt werden können, das über zumindest einen Halter (28, 29) auf einem Auflagetisch (18) befestigt ist, Mittel (20, 21) vorgesehen sind, um einer Vorschubrichtung (Z) folgend eine relative Vorschubbewegung zwischen dem zu sägenden Werkstück (17) und der Drahtschicht (15) zu bewirken, die Sägevorrichtung Mittel (34) umfasst, um einer zu den Achsen (13) der Drahtführungszylinder im Wesentlichen parallelen Schneidrichtung (Y) folgend eine relative Querverschiebung zwischen dem Satz der gesägten Scheiben (30) des zu sägenden Werkstücks (17) und der Drahtschicht (15) zu bewirken, so dass die Drähte der Drahtschicht als Werkzeuge dienen, um die gesägten Scheiben (30) abzuschneiden, und die Amplitude dieser relativen Querverschiebung so festgelegt wird, dass die gesägten Scheiben (30) losgelöst und voneinander sowie von ihrem Halter (28, 29) getrennt werden, **dadurch gekennzeichnet, dass** sie Haltemittel (40) umfasst, die so ausgelegt sind, dass sie während des Sägens und Abschneidens und danach die gesägten Scheiben (30) im Wesentlichen parallel zueinander und so halten, dass die Breite der Sägespalte (31) im Wesentlichen bewahrt wird, wobei die Haltemittel Trennelemente (43) umfassen, die dafür bestimmt sind, zumindest teilweise in die Sägespalte (31) zwischen den Scheiben (30) eingeführt zu werden, um letztere zu halten, diese Trennelemente auf zumindest einen Träger (45, 56) montiert sind, die Vorrichtung Mittel (74) zum Auseinanderspreizen umfasst und Trennelemente (43) ein Auseinanderspreizen der gesägten Scheiben (30) erlauben.

2. Vorrichtung nach Anspruch 1, **dadurch gekennzeichnet, dass** die Mittel (74) zum Auseinanderspreizen aus Bändern (75) bestehen, die eine ziehharmonikaartig gefaltete Struktur aufweisen und in der Lage sind, die durch Drähte (44) gebildeten Trennelemente (43) zu halten.

3. Vorrichtung nach Anspruch 1, **dadurch gekennzeichnet, dass** die Mittel (34) zur Bewerkstelligung einer relativen Querverschiebung aus Führungs- und Gleitelementen (32) bestehen, die eine relative Translationsbewegung des oder der zu sägenden Werkstücke (17) bezüglich der Drahtschicht (15) erlauben.

4. Vorrichtung nach Anspruch 3, **dadurch gekennzeichnet, dass** die Führungs- und Gleitelemente (32) zwischen dem Auflagetisch (18) und dem zumindest einen Halter (28, 29) oder im Auflagetisch (18) angeordnet sind.

5. Vorrichtung nach einem der vorangehenden Ansprüche, **dadurch gekennzeichnet, dass** sie zumindest ein Aufnahmeorgan (25) umfasst, das abnehmbar an der Vorrichtung angebracht und dafür ausgelegt ist, die gesägten und nach ihrem Abschneiden getrennten Scheiben (30) aufzunehmen.

6. Vorrichtung nach Anspruch 5, **dadurch gekennzeichnet, dass** die Haltemittel (40) im Aufnahmeorgan (25) angeordnet sind.

7. Sägevorrichtung nach Anspruch 1, **dadurch gekennzeichnet, dass** der zumindest eine Träger (45, 56) in zumindest einem Gefäss (41, 50) angeordnet ist, das an dem Rahmen (10) angebracht ist.

8. Sägevorrichtung nach Anspruch 7, **dadurch gekennzeichnet, dass** sie zumindest zwei Träger (56) umfasst, die in zumindest zwei Schubfächern (51, 52) angeordnet sind, die gleitend im Gefäss (50) angebracht sind.

9. Vorrichtung nach Anspruch 7 oder 8, **dadurch gekennzeichnet, dass** die Trennelemente (43) aus Drähten (44, 44a) bestehen, die auf dem oder den Trägern (45, 56) waagerechten und/oder schrägen Richtungen folgend und/oder so aufgespannt sind, dass sie sich kreuzende Drahtschichten bilden.
